# EUROPEAN PATENT SPECIFICATION

(11) **EP 3 030 989 B1**
(45) Date of publication and mention of the grant of the patent: **17.06.2020**
(21) Application number: 14835144.8
(22) Date of filing: 05.08.2014
(51) Int. Cl.: G06F 16/957

(54) **PROVIDING INFORMATION IN ASSOCIATION WITH A SEARCH FIELD**
BEREITSTELLUNG VON INFORMATIONEN IN ZUSAMMENHANG MIT EINEM SUCHFELD
FOURNITURE D'INFORMATIONS EN ASSOCIATION AVEC UN CHAMP DE RECHERCHE

(30) Priority: 05.08.2013 US 201313959654
(43) Date of publication of application: 15.06.2016
(73) Proprietor: Google LLC, Mountain View, CA 94043 (US)
(72) Inventor: LIUTIKAS, Aurimas, Mountain View, CA 94043 (US); CHOC, Theodore Nicholas, Mountain View, CA 94043 (US)
(74) Representative: Betten & Resch
(86) International application number: PCT/US2014/049804
(87) International publication number: WO 2015/021057

(56) References cited:
- US-A1- 2009 144 234
- US-A1- 2009 248 674
- US-A1- 2009 249 198
- US-A1- 2010 082 604
- US-A1- 2012 265 779
- US-A1- 2012 296 743
- US-B1- 8 332 748
- US-B1- 8 433 719
- Anonymous: "Address bar - Wikipedia, the free encyclopedia", , 14 June 2012 (2012-06-14), XP55272400, Retrieved from the Internet: URL:https://en.wikipedia.org/w/index.php?t itle=Address_bar&oldid=497574218 [retrieved on 2016-05-12]

## Description

### BACKGROUND

The present disclosure generally relates to searches, and in particular, to providing information in association with a search field.

A user of an application (e.g., a web browser) can enter a search term into a search field of the application. For example, the search field can be an address bar (e.g., for entry of uniform resource locators (URLs) or for search terms) or can be a separate search input field. The application can request that a search be performed based on the search term entered by the user via the search field.
Address bar is described, for example, in the free encyclopedia Wikipedia. See, e.g., English entry "Address bar" as edited and provided on June 14, 2012 at 16:44.
US 8 332 748 B1 discloses methods and apparatus, including computer program products, implementing and using techniques completing a user entry in an entry field displayed on a user interface of a computing device. An entry field is displayed on a display of a computing device. In response to a user entering at least one character into the entry field, two or more distinct auto-complete menus are displayed. Each auto-complete menu is included in a separate display element, and each auto-complete menu contains suggestions that correspond to the current at least one character in the entry field. A computer-implemented method for prefetching search query results is also described in US 8 332 748 B1.

### SUMMARY

Objects of the present invention are achieved by subject matters of independent claims. Dependent claims define further exemplar embodiments.

The disclosed subject matter relates to a machine-implemented method of providing information in association with a search field. The method comprises receiving input from a user via a search field of an application, the input including at least partial entry of a search term. The method further comprises obtaining first information and second information in response to receiving the user input, the first information corresponding to contextual data for at least one of the user or the at least partial entry of the search term, and the second information corresponding to one or more search term predictions for the at least partial entry of the search term. In addition, the method comprises providing for display of the first information and the second information within the application, in association with the search field.

The disclosed subject matter further relates to a system for providing information in association with a search field. The system comprises one or more processors, and a machine-readable medium comprising instructions stored therein, which when executed by the processors, cause the processors to perform operations comprising receiving input from a user via a search field of an application, the input including at least partial entry of a search term. The operations further comprise obtaining first information and second information in response to receiving the user input, the first information corresponding to contextual data for at least one of the user or the at least partial entry of the search term, and the second information corresponding to one or more search term predictions for the at least partial entry of the search term. In addition, the operations comprise providing for display of the first information and the second information within the search field of the application.

The disclosed subject matter also relates to a machine-readable medium comprising instructions stored therein, which when executed by a system, cause the system to perform operations comprising receiving input from a user via a search field of an application, the input including at least partial entry of a search term. The operations further comprise obtaining first information and second information in response to receiving the user input, the first information corresponding to contextual data for at least one of the user or the at least partial entry of the search term, and the second information corresponding to one or more search term predictions for the at least partial entry of the search term. In addition, the operations comprise providing for display of the first information and the second information within the search field of the application. The first information is displayed as one or more entries within a first portion of the **search** field, and the second information is displayed as one or more entries within a second portion of the search field.

It is understood that other configurations of the subject technology will become readily apparent to those skilled in the art from the following detailed description, wherein various configurations of the subject technology are shown and described by way of illustration. As will be realized, the subject technology is capable of other and different configurations and its several details are capable of modification in various other respects, all without departing from the scope of the subject technology as claimed. Accordingly, the drawings and detailed description are to be regarded as illustrative in nature and not as restrictive.

### BRIEF DESCRIPTION OF THE DRAWINGS

Features of the subject technology are set forth in the appended claims. However, for purpose of explanation, several embodiments of the subject technology are set forth in the following figures.
FIG. 1 illustrates an example network environment in which information can be provided in association with a search field.
FIG. 2 illustrates an example user interface of a web browser running on a personal computer, where the user interface includes a search field for user entry of a search term.
FIG. 3 illustrates an example user interface of an application running on a mobile device, where the user interface includes a search field for user entry of a search term.
FIG. 4 illustrates an example of providing contextual data for a user entering a search term within a search field of an application.
FIG. 5 illustrates an example of providing contextual data for partial entry of a search term entered within a search field of an application.
FIG. 6 illustrates an example process by which information is provided in association with a search field.
FIG. 7 conceptually illustrates an example electronic system with which some implementations of the subject technology can be implemented.

### DETAILED DESCRIPTION

The detailed description set forth below is intended as a description of various configurations of the subject technology and is not intended to represent the only configurations in which the subject technology may be practiced. The appended drawings are incorporated herein and constitute a part of the detailed description. The detailed description includes specific details for the purpose of providing a thorough understanding of the subject technology. However, it will be clear and apparent to those skilled in the art that the subject technology is not limited to the specific details set forth herein and may be practiced without these specific details. In some instances, well-known structures and components are shown in block diagram form in order to avoid obscuring the concepts of the subject technology.

As noted above, a user of an application (e.g., a web browser) can enter a search term into a search field of the application. For example, the search field can be an address bar (e.g., for entry of uniform resource locators (URLs) or for search terms) or can be a separate search input field. The application can request that a search (e.g., a web-based search) be performed based on the search term entered by the user via the search field.

In response to entry (or partial entry) of a search term by the user, the system of the subject disclosure can display search predictions corresponding to the user input. For example, the search predictions correspond to results for a popular search that begins with the same letters input by a user. The search predictions appear in association with the search field, for example, as entries of a drop-down list interface within the search field.

The subject disclosure provides for displaying different types of information in association with a search field. Input is received from a user via a search field (e.g., address bar or other search input field) of the application (e.g., web browser), the input including at least partial entry of a search term. First information and second information are obtained in response to receiving the user input. The first information corresponds to contextual data for the user (e.g., alerts pertaining to the time/place of the user, a device of the user, or a user profile) and/or to contextual data for the entered, or partially-entered, search term (e.g., a response to the user's search term, such as the current temperature if the user enters "weather"). The second information corresponds to one or more search term predictions (or URL suggestions) for the at least partial entry of the search term. The first information and the second information are displayed within the application, in association with the search field.

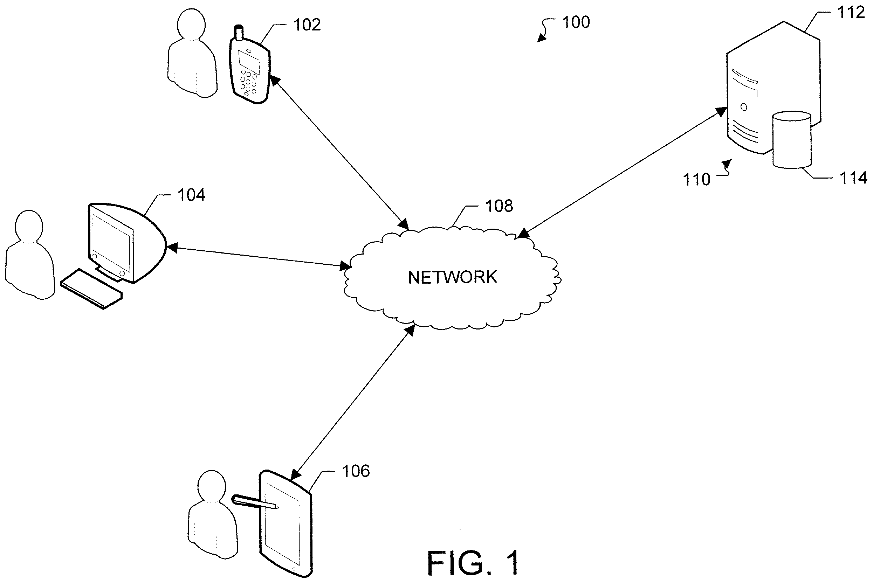

FIG. 1 illustrates an example network environment in which information can be provided in association with a search field. A network environment 100 includes computing devices 102, 104 and 106 (hereinafter "102-106") and computing system 110 (hereinafter "110-112"). Computing devices 102-106 and computing system 110 can communicate with each other through a network 108. Computing system 110 can include one or more computing devices 112 (e.g., one or more servers), and one or more computer-readable storage devices 114 (e.g., one or more databases).

Each of computing devices 102-106 can represent various forms of processing devices. Example processing devices can include a desktop computer, a laptop computer, a handheld computer, a personal digital assistant (PDA), a cellular telephone, a network appliance, a camera, a smart phone, an enhanced general packet radio service (EGPRS) mobile phone, a media player, a navigation device, an email device, a game console, or a combination of any these data processing devices or other data processing devices. Computing devices 102-106 and 112 may be provided access to or receive application software executed or stored on any of the other computing systems 102-106 and 112.

Computing device 112 may be any system or device having a processor, a memory, and communications capability for providing content to the electronic devices. In some example aspects, server 110 can be a single computing device, for example, a computer server. In other embodiments, server 110 can represent more than one computing device working together to perform the actions of a server computer (e.g., cloud computing). Further, computing device 112 can represent various forms of servers including, but not limited to a web server, an application server, a proxy server, a network server, or a server farm.

In some aspects, the computing devices may communicate wirelessly through a communication interface (not shown), which may include digital signal processing circuitry where necessary. The communication interface may provide for communications under various modes or protocols, for example, Global System for Mobile communication (GSM) voice calls, Short Message Service (SMS), Enhanced Messaging Service (EMS), or Multimedia Messaging Service (MMS) messaging, Code Division Multiple Access (CDMA), Time Division Multiple Access (TDMA), Personal Digital Cellular (PDC), Wideband Code Division Multiple Access (WCDMA), CDMA2000, or General Packet Radio System (GPRS), among others. For example, the communication may occur through a radio-frequency transceiver (not shown). In addition, short-range communication may occur, for example, using a Bluetooth, WiFi, or other such transceiver.

In some aspects, network environment 100 can be a distributed client/server system that spans one or more networks, for example, network 108. Network 108 can be a large computer network, for example, a local area network (LAN), wide area network (WAN), the Internet, a cellular network, or a combination thereof connecting any number of mobile clients, fixed clients, and servers. Further, the network 108 can include, but is not limited to, any one or more of the following network topologies, including a bus network, a star network, a ring network, a mesh network, a star-bus network, tree or hierarchical network, and the like. In some aspects, communication between each client (e.g., computing devices 102-106) and server (e.g., server 110) can occur via a virtual private network (VPN), Secure Shell (SSH) tunnel, or other secure network connection. In some aspects, network 108 may further include a corporate network (e.g., intranet) and one or more wireless access points.

In example aspects, server 110 is a search engine which can provide search results in response to a search term received from one or more client devices (e.g., computing devices 102-106). For example, processing device 112 executes computer instructions stored in data store 114, for example, to host a search engine website. A user of any of computing devices 102-106 can enter a search term/query via a search field of an application (e.g., web browser) on the computing device. The search engine of server 110 can perform a web-based using the search term entered by the user as input, and provide the results of the search to the computing device 102-106.

In example aspects, the client device (e.g., any of computing devices 102-106), in conjunction with a server (e.g., server 110), provides information in association with a search field. The client device receives input from a user via a search field of an application (e.g., a web browser running on the client device). The search field can be configured to receive user input for a web-based search, the input including at least partial entry of a search term. The client device obtains first information and second information in response to receiving the user input. The first information corresponds to contextual data for the user or and/or to contextual data for the at least partial entry of the search term, and the second information corresponds to one or more search term predictions (or URL suggestions) for the at least partial entry of the search term. In example aspects, the first information is obtained from a web server (e.g., the search engine of server 110, or another server such as a social networking website, a news server, or a software update server). In addition, the second information is obtained from the search engine of server 110. The client device (e.g., computing device 102-106) provides for display of the first information and the second information within the application, in association with the search field.

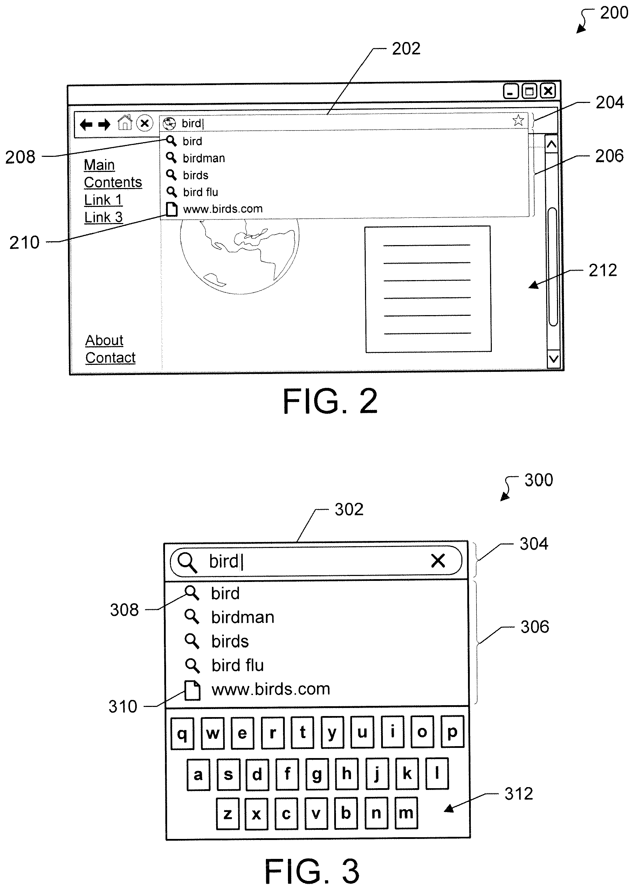

FIG. 2 illustrates an example user interface of a web browser running on a personal computer, where the user interface includes a search field for user entry of a search term. For example, user interface 200 may be provided in an implementation of a web browser for a desktop computing platform or device (e.g., computing device 104 of FIG. 1, as described above). However, user interface 200 is not limited thereto. In addition, while the example of FIG. 2 is described with reference to a web browser, the subject disclosure is not limited thereto, and can apply to other applications which include a search field for initiating a search (e.g., a web-based search).

Web page content or data loaded within the browser (e.g., within a cache of the browser) may be displayed in a content area 212. The user may interact with the content displayed in content area 212 using one or more user input devices of the computing device (e.g., a mouse for selecting inside the field and a keyboard for entering text characters). Also, as shown in FIG. 2, user interface 200 may include various other user control elements including, for example, navigation controls for the user to navigate between different web pages to be loaded and displayed within content area 212.

In addition, user interface 200 includes an address bar 202 that enables a user at the computing device to enter a location address (e.g., URL) corresponding to a web page to be loaded within the browser. Address bar 202 includes an input box 204 for user input. For example, the user may enter the location address of a particular web page using one or more user input devices of the computing device. In some implementations, the web browser may provide a separate search field (not shown) that is dedicated to performing these search queries. Additionally or alternatively, input box 204 may also function as a search field. Thus, in addition to inputting web addresses for navigating to web pages, the user may initiate web searches based on at least a portion of a search term entered by the user into input box 204.

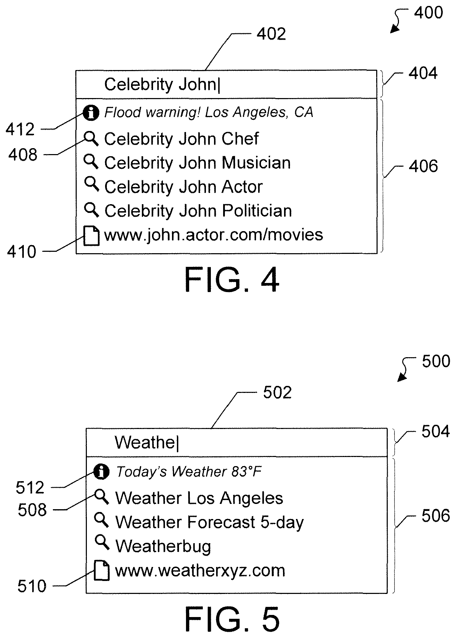

In addition to input box 204, address bar 202 provides for a suggestion interface 206. Suggestion interface 206 can be a drop-down list interface. Suggestion interface 206 can provide suggestions to the user, based on the entry (or partial entry) of a user-entered term within input box 204. These suggestions can include, but are not limited to, search term predictions and/or URL suggestions to the user. As will be described in greater detail below with reference to FIGS. 4-5, the suggestions can also include contextual data related to the user, to the entered search term, or to both.

In the example of FIG. 2, the user enters the term "bird" within input box 204, and suggestions are provided within suggestion interface 206 based on the term "bird." In this regard, search term predictions displayed within suggestion interface 206 are indicated by icon 208, which is depicted as a magnifying glass. URL suggestions are indicated by icon 210, which is depicted as a page. It should be noted that a magnifying glass and a page are examples of images that can be used for icons 208 and 210, and that other images (or no image) can be used.

Upon the user selecting a search term prediction listed within suggestion interface 206, the computing device can query a search engine (e.g., hosted by server 110) with the term corresponding to the selected search term prediction. The search engine can perform a search based on the term, and the user can be provided with search results at the computing device. Alternatively, or in addition, upon the user selecting a URL suggestion listed within suggestion interface 206, the computing device can be directed to the web page corresponding to the selected URL.

Search term predictions and URL suggestions for suggestion interface 206 can be obtained in different manners. For example, the suggestions can be associated with the user's prior search or browsing history, where prior search terms or URL's entered by a user are compared with current input within input box 204. The prior search or browsing history can be accessed from local storage (e.g., within a cache) or from remote storage (e.g., on a server in association with a user profile). Prior terms that match the current search term (or partial search term) can be listed within suggestion interface 206.

In addition to displaying suggestions associated with the user's prior search or browsing history, suggestions provided within suggestion interface 206 can be based on the cumulative search activities of other users. For example, the computing device (e.g., computing device 104) may utilize a prediction service for automatically determining the suggestions based on the search term input by the user and publicly available data associated with the search activities of other users. The prediction service and the other users' search activities may be provided, for example, by a provider of a search engine (e.g., hosted by server 110) for performing web searches. Further, the predicted search queries may be algorithmically determined by the prediction service based on a number of objective factors (e.g., popularity of search terms) without any user intervention. The search data used by the prediction service may be updated frequently to provide up-to-date or relevant search queries.

Accordingly, the prediction service may be associated with an "auto-complete" feature of the web browser that attempts to predict search queries of interest to the user (e.g., the search string being input by the user) based on the search history of the user and other users. The user may be able to enable or disable the browser's use of such a prediction service via, for example, a user setting or configuration panel of the web browser. As noted above, the search term being input by the user into input box 204 may be a portion (e.g., one or more characters) of a search string. As the user inputs each character of the search string, the additional suggestions may be displayed in real time within the suggestion interface 206. The computing device may be further configured to dynamically update in real time the entries being displayed within the drop-down list based on the additional suggestions as predicted by the prediction service.

FIG. 3 illustrates an example user interface of an application running on a mobile device, where the user interface includes a search field for user entry of a search term. The application can be web browser or another type of application for accessing web content via a search field. For example, user interface 300 may be provided in an implementation of an application for a smart phone (e.g., mobile device 102 of FIG. 1, as described above). However, user interface 300 is not limited thereto.

Web page content or data loaded within the application (e.g., within a cache of the application) may be displayed in a content area (not shown). The user may interact with the content displayed in the content area using one or more user input devices of the mobile device (e.g., a touchscreen). User interface 300 may include a keyboard 312, which is implemented in software as a soft keyboard for a touch-screen display of the mobile device. In addition, user interface 300 may include various other user control elements (not shown) including, for example, navigation controls for the user to navigate between different web pages to be loaded and displayed within the content area.

In addition, user interface 300 includes an address bar 302 that enables a user of the mobile device to enter a location address (e.g., URL) corresponding to web content (e.g., a web page) to be loaded within the application. Address bar 302 includes an input box 304 for user input. For example, the user may enter the location address of a particular web page using a touchscreen the mobile device. In some implementations, the application may provide a separate search field (not shown) that is dedicated to performing these search queries. Additionally or alternatively, input box 304 may also function as a search field. Thus, in addition to inputting web addresses for navigating to web pages, the user may initiate web searches based on at least a portion of a search term entered by the user into input box 304.

In addition to input box 304, address bar 302 provides for a suggestion interface 306. Suggestion interface 306 can be a drop-down list interface. Suggestion interface 306 can provide suggestions to the user, based on the entry (or partial entry) of a user-entered term within input box 304. These suggestions can include, but are not limited to, search term predictions and/or URL suggestions to the user. As will be described in greater detail below with reference to FIGS. 4-5, the suggestions can also include contextual data related to the user, to the entered search term, or to both.

In the example of FIG. 3, the user enters the term "bird" within input box 304, and suggestions are provided within suggestion interface 306 based on the term "bird." In this regard, search term predictions displayed within suggestion interface 306 are indicated by icon 308, which is depicted as a magnifying glass. URL suggestions are indicated by icon 310, which is depicted as a page. It should be noted that a magnifying glass and a page are examples of images that can be used for icons 308 and 310, and that other images (or no image) can be used.

Upon the user selecting a search term prediction listed within suggestion interface 306, the mobile device can query a search engine (e.g., hosted by server 110) with the term corresponding to the selected search term prediction. The search engine can perform a search based on the term, and the user can be provided with search results at the mobile device. Alternatively, or in addition, upon the user selecting a URL suggestion listed within suggestion interface 306, the mobile device can be directed to the web page corresponding to the selected URL.

Search term predictions and URL suggestions for suggestion interface 306 can be obtained in different manners. For example, the suggestions can be associated with the user's prior search or browsing history, where prior search terms or URL's entered by a user are compared with current input within input box 304. The prior search or browsing history can be accessed from local storage (e.g., within a cache) or from remote storage (e.g., on a server in association with a user profile). Prior terms that match the current search term (or partial search term) can be listed within suggestion interface 306.

In addition to displaying suggestions associated with the user's prior search or browsing history, suggestions provided within suggestion interface 306 can be based on the cumulative search activities of other users. For example, the mobile device (e.g., mobile device 104) may utilize a prediction service for automatically determining the suggestions based on the search term input by the user and publicly available data associated with the search activities of other users. The prediction service and the other users' search activities may be provided, for example, by a provider of a search engine (e.g., hosted by server 110) for performing web searches. Further, the predicted search queries may be algorithmically determined by the prediction service based on a number of objective factors (e.g., popularity of search terms) without any user intervention. The search data used by the prediction service may be updated frequently to provide up-to-date or relevant search queries.

Accordingly, the prediction service may be associated with an "auto-complete" feature of the application that attempts to predict search queries of interest to the user (e.g., the search string being input by the user) based on the search history of the user and other users. The user may be able to enable or disable the application's use of such a prediction service via, for example, a user setting or configuration panel of the application. As noted above, the search term being input by the user into input box 304 may be a portion (e.g., one or more characters) of a search string. As the user inputs each character of the search string, the additional suggestions may be displayed in real time within the suggestion interface 306. The mobile device may be further configured to dynamically update in real time the entries being displayed within the drop-down list based on the additional suggestions as predicted by the prediction service.

FIG. 4 illustrates an example of providing contextual data for a user entering a search term within a search field of an application. Interface 400 includes an address bar 402, which can correspond to address bar 202 of FIG. 2 (e.g., for a desktop or laptop computer) or to address bar 302 of FIG. 3 (e.g., for a mobile device). In example aspects, address bar 402 is a search field for user entry of search terms to perform searches (e.g., web-based searches), or for direct user entry of URLs. The user can enter a search term (or URL) within input box 404, and one or more suggestions can be displayed within suggestion interface 406.

As noted above with reference to FIGS. 2 and 3, the suggestion interface (e.g., suggestion interface 406) can list search term predictions and/or URL suggestions based on the input received within the input box (e.g., input box 404). In the example of FIG. 4, the user enters the search term "Celebrity John" within input box 404, and search term predictions and URL suggestions are displayed within suggestion interface 406 based on the term "Celebrity John." In example aspects, search term predictions are represented by icon 408 (e.g., a magnifying glass image), while URL suggestions are represented by icon 410 (e.g., a page image).

In addition to search term predictions and URL suggestions, suggestion interface 406 also includes contextual data for the user. The contextual data is represented by icon 412 in FIG. 4 as an information symbol. However, other types of symbols can be used.

The contextual data for the user can correspond to news, alerts or updates associated with a geography, time, user profile or device of the user. In the example of FIG. 4, the contextual data represented by icon 412 indicates a flood warning in the Los Angeles, CA area. For example, a user profile for the user may be remotely stored in association with a social networking service, an email service, or a search engine service (e.g., hosted on server 110). The user profile may include, among other things, residential or work location information for the user (e.g., the cit(ies) where the user lives/works). The application running on the user device (e.g., computing device 102-106) may obtain this information from the appropriate server. Alternatively, or in addition, the location of the user can correspond to a present location of the user, obtained, for example by location-based services (e.g., GPS, Wi-Fi, triangulation).

Given a location associated with the user (e.g., a current, home or work location), the user device can be configured to receive updates from a server which provides information for that location. In FIG. 4, news of a flood in Los Angeles is obtained by the user device (e.g., from a news server) and surfaced within suggestion interface 406.

It should be noted that the subject technology is not limited to news updates related to a location of the user. Other types of contextual data may be obtained and presented within suggestion interface 406. For example, the contextual data for the user can include, but is not limited to, events of contacts related to the user (e.g., obtained from a social networking service) and alerts of scheduled meetings (e.g., obtained from a local or remote calendar application associated with the user). The contextual data includes notifications of software version updates (e.g., obtained locally or remotely for the user device) for out-of-date application software.

In example aspects, the contextual data is pre-fetched (e.g., from a web server) and stored in local memory of the user device, and obtained from the local memory in response to the user entering input within input box 404. Alternatively, or in addition, the contextual data is obtained from a server at the time the user inputs a search term within input box 404.

With reference to presentation of the contextual data related to the user, the contextual data can correspond to one or more notifications displayed as one or more entries within suggestion interface 406. Display of the contextual data can be differentiated relative to other suggestions (e.g., search term predictions, URL suggestions) within suggestion interface 406. For example, the contextual data notifications can be displayed in a different font/color to alert the user. In addition, different types of contextual data notifications can be displayed in different manners relative to each other (e.g., a flood warning may appear in a different color than an event update for a user contact). It should be noted that the order of the types of suggestions (e.g., contextual data, search term predictions, or URL suggestions) illustrated in FIG. 4 is an example, and other orders can be used.

In addition, the application (e.g., web browser) running on the user device (e.g., personal computer or mobile device) may provide for a settings interface, which includes controls for enabling or disabling the different types of contextual data notifications that the user will see, as well as different display options for the selected notifications.

As mentioned above with reference to FIGS. 2-3, user selection of a search term prediction within suggestion interface 406 can query a search engine with the selected term, while user selection of a URL suggestion can direct the application (e.g., web browser) to the web page corresponding to the selected URL. It should be noted that the user can also select the one or more entries of contextual data presented within suggestion interface 406. In example aspects, in response to this selection, the application can be directed to a predetermined web page. For example, in response to user selection of the "flood warning" entry in suggestion interface 406, the application can be directed to a news article web page providing details for the flood. This web page can be selected, for example, based on popularity of the website and/or search activities by the user or other users. Alternatively, in response to the user selection, the application may query a search engine (e.g., hosted on server 110) with the text (or part of the text) corresponding to the selected entry. For example, a location-based query search can be requested for the search term "flood warning" with the location of "Los Angeles, CA."

FIG. 5 illustrates an example of providing contextual data for partial entry of a search term entered within a search field of an application. Interface 500 includes an address bar 502, which can correspond to address bar 202 of FIG. 2 (e.g., for a desktop or laptop computer) or to address bar 302 of FIG. 3 (e.g., for a mobile device). In example aspects, address bar 502 is a search field for user entry of search terms to perform searches (e.g., web-based searches), or for direct user entry of URLs. The user can enter a search term (or URL) within input box 504, and one or more suggestions can be displayed within suggestion interface 506.

As noted above with reference to FIGS. 2 and 3, the suggestion interface (e.g., suggestion interface 506) can list search term predictions and/or URL suggestions based on the input received within the input box (e.g., input box 504). In the example of FIG. 5, the user enters the search term "Weathe" in input box 504, and search term predictions and URL suggestions are displayed within suggestion interface 506 based on the term "Weathe." In example aspects, search term predictions are represented by icon 508 (e.g., a magnifying glass image), while URL suggestions are represented by icon 510 (e.g., a page image).

In addition to search term predictions and URL suggestions, suggestion interface 506 also includes contextual data for the search term entered (or partially entered) by the user. The contextual data is represented by icon 512 in FIG. 5 as an information symbol. However, other types of symbols can be used.

The contextual data for the search term (or partial search term) can correspond to an answer to the search term (e.g., if the search term is a question), a search result for the search term, or any type of information related to the search term. In addition, the contextual data for the search term can also be related to the user. In the example of FIG. 5, the contextual data represented by icon 512 indicates that the current temperature is 83°F. Thus, based on the partially-entered search term of "weathe," the application on the user device obtains current weather information for a location associated with a user.

For example, a user profile for the user may be remotely stored in association with a social networking service, an email service, or a search engine service (e.g., hosted on server 110). The user profile may include, among other things, residential or work location information for the user (e.g., the cit(ies) where the user lives/works). The application running on the user device (e.g., computing device 102-106) may obtain this information from the appropriate server. Alternatively, or in addition, the location of the user can correspond to a present location of the user, obtained, for example by location-based services (e.g., GPS, Wi-Fi, triangulation).

Given a location associated with the user (e.g., a current, home or work location), and in response to partial entry of the term "weathe," the user device can be configured to receive updates from a server (e.g., a weather server) which provides weather information for that location. In FIG. 5, weather for Los Angeles is obtained by the user device (e.g., from a weather server) and surfaced within suggestion interface 506.

It should be noted that the subject technology is not limited to weather updates related to a location of the user. Other types of contextual data may be obtained and presented within suggestion interface 506. For example, the contextual data for the search term (or partial search term) can include, but is not limited to, answers to the search term (e.g., if the search term is a question), a search result for the search term, or any type of information related to the search term.

Non-limiting examples include displaying the actual height of celebrity X in response to user entry of "what is height of celebrity X," displaying the definition of a term Y in response to user entry of "definition of term Y," displaying specific names of restaurants which are geographically close to the user in response to user entry of "restaurants" or "nearby restaurants" (e.g., for map-based searches). Other non-limiting examples include displaying tracking information (e.g., delivered, in transit, shipped) in response to a user inputting a tracking number for a purchased item, movie ratings or movie theater playtimes in response to the user inputting a movie title, and business/restaurant information (e.g., open hours, phone number, address) in response to the user inputting the business/restaurant name.

In example aspects, the contextual data is pre-fetched (e.g., from a web server) and stored in local memory of the user device, and obtained from the local memory in response to the user entering input within input box 504. Alternatively, or in addition, the contextual data is obtained from a server at the time the user inputs a search term within input box 504.

With reference to presentation of the contextual data for the search term (or partial search term), the contextual data can correspond to one or more notifications displayed as one or more entries within suggestion interface 506. Display of the contextual data can be differentiated relative to other suggestions (e.g., search term predictions, URL suggestions) within suggestion interface 506. For example, the contextual data notifications can be displayed in a different font/color to alert the user. In addition, different types of contextual data notifications can be displayed in different manners relative to each other. It should be noted that the order of the types of suggestions (e.g., contextual data, search term predictions, or URL suggestions) illustrated in FIG. 5 is an example, and other orders can be used.

In addition, the application (e.g., web browser) running on the user device (e.g., personal computer or mobile device) may provide for a settings interface, which includes controls for enabling or disabling the different types of contextual data notifications that the user will see, as well as different display options for the selected notifications.

Furthermore, the user can select the one or more entries of contextual data presented within suggestion interface 506. In example aspects, in response to this selection, the application can be directed to a predetermined web page. For example, in response to user selection of the "today's weather 83°F" entry in suggestion interface 506, the application can be directed to a news article web page providing details for the weather. This web page can be selected, for example, based on popularity of the website and/or search activities by the user or other users. Alternatively, in response to the user selection, the application may query a search engine (e.g., hosted on server 110) with the text (or part of the text, for example, only the text entered by the user) corresponding to the selected entry. For example, a location-based query search can be requested for the search term "weather" (e.g., with the location of "Los Angeles, CA.").

In situations in which the systems discussed herein collect personal information about users, or may make use of personal information, the users may be provided with an opportunity to control whether programs or features collect user information (e.g., information about a user's social network, social actions or activities, profession, a user's preferences, or a user's current location), or to control whether and/or how to receive content from the content server that may be more relevant to the user. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over how information is collected about the user and used by a content server.

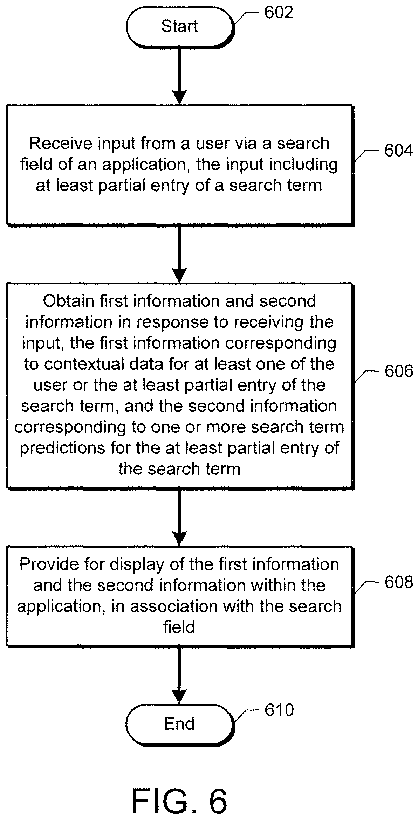

FIG. 6 illustrates an example process by which information is provided in association with a search field. Following start block 602, input is received from a user via a search field of an application at step 604. The search field can be configured to receive user input for a web-based search, and the input includes at least partial entry of a search term. The application can be a web browser. The search field can be included in an address bar of the application, the address bar enabling the user to enter a uniform resource location.

At step 606, first information and second information are obtained in response to receiving the user input. The first information corresponds to contextual data for at least one of the user or the at least partial entry of the search term, and the second information corresponds to one or more search term predictions for the at least partial entry of the search term. The second information can also correspond to one or more URL suggestions for the at least partial entry of the search term.

The first information can correspond to contextual data for the user, the contextual data corresponding to news, alerts or updates associated with a geography, time, user profile or device of the user. Alternatively, or in addition, the first information can correspond to contextual data for the at least partial entry of the search term, the contextual data corresponding to a search result for the search term.

The first information can be pre-fetched and stored in local memory prior to the receiving step, and obtaining the first information can include obtaining the first information from the local memory. Alternatively, or in addition, obtaining the first information can include obtaining the first information from a web server.

At step 608, display of the first information and the second information is provided within the application, in association with the search field. Providing for display of the first information and the second information can include displaying the first information and the second information within the search field of the application.

The first information can be displayed as one or more entries within a first portion of the search field, and the second information can be displayed as one or more entries within a second portion of the search field. The one or more entries for both the first information and the second information can be displayed within a drop-down list interface. Providing for display of the first information and the second information can include providing for differentiated display of the first information relative to the second information.

A user selection of the displayed first information can be received. In response to receiving the selection, a web page that is associated with the first information can be determined, and the determined web page can be navigated to. Alternatively, or in addition, a user selection of one of the one or more search term predictions corresponding to the second information can be received. A search engine can be queried with the selected search term prediction. The process then ends at end block 610.

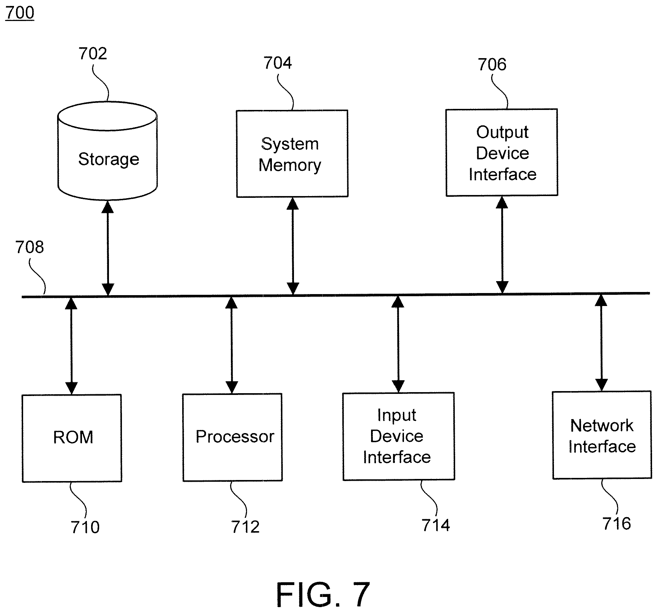

FIG. 7 conceptually illustrates an example electronic system with which some implementations of the subject technology can be implemented. Electronic system 700 can be a computer, phone, PDA, or any other sort of electronic device. Such an electronic system includes various types of computer readable media and interfaces for various other types of computer readable media. Electronic system 700 includes a bus 708, processing unit(s) 712, a system memory 704, a read-only memory (ROM) 710, a permanent storage device 702, an input device interface 714, an output device interface 706, and a network interface 716.

Bus 708 collectively represents all system, peripheral, and chipset buses that communicatively connect the numerous internal devices of electronic system 700. For instance, bus 708 communicatively connects processing unit(s) 712 with ROM 710, system memory 704, and permanent storage device 702.

From these various memory units, processing unit(s) 712 retrieves instructions to execute and data to process in order to execute the processes of the subject disclosure. The processing unit(s) can be a single processor or a multi-core processor in different implementations.

ROM 710 stores static data and instructions that are needed by processing unit(s) 712 and other modules of the electronic system. Permanent storage device 702, on the other hand, is a read-and-write memory device. This device is a non-volatile memory unit that stores instructions and data even when electronic system 700 is off. Some implementations of the subject disclosure use a mass-storage device (for example, a magnetic or optical disk and its corresponding disk drive) as permanent storage device 702.

Other implementations use a removable storage device (for example, a floppy disk, flash drive, and its corresponding disk drive) as permanent storage device 702. Like permanent storage device 702, system memory 704 is a read-and-write memory device. However, unlike storage device 702, system memory 704 is a volatile read-and-write memory, such a random access memory. System memory 704 stores some of the instructions and data that the processor needs at runtime. In some implementations, the processes of the subject disclosure are stored in system memory 704, permanent storage device 702, or ROM 710. For example, the various memory units include instructions for providing information in association with a search field in accordance with some implementations. From these various memory units, processing unit(s) 712 retrieves instructions to execute and data to process in order to execute the processes of some implementations.

Bus 708 also connects to input and output device interfaces 714 and 706. Input device interface 714 enables the user to communicate information and select commands to the electronic system. Input devices used with input device interface 714 include, for example, alphanumeric keyboards and pointing devices (also called "cursor control devices"). Output device interfaces 706 enables, for example, the display of images generated by the electronic system 700. Output devices used with output device interface 706 include, for example, printers and display devices, for example, cathode ray tubes (CRT) or liquid crystal displays (LCD). Some implementations include devices, for example, a touchscreen that functions as both input and output devices.

Finally, as shown in FIG. 7, bus 708 also couples electronic system 700 to a network (not shown) through a network interface 716. In this manner, the computer can be a part of a network of computers (for example, a local area network ("LAN"), a wide area network ("WAN"), or an Intranet, or a network of networks, for example, the Internet. Any or all components of electronic system 700 can be used in conjunction with the subject disclosure.

Many of the above-described features and applications are implemented as software processes that are specified as a set of instructions recorded on a computer readable storage medium (also referred to as computer readable medium). When these instructions are executed by one or more processing unit(s) (e.g., one or more processors, cores of processors, or other processing units), they cause the processing unit(s) to perform the actions indicated in the instructions. Examples of computer readable media include, but are not limited to, CD-ROMs, flash drives, RAM chips, hard drives, EPROMs, etc. The computer readable media does not include carrier waves and electronic signals passing wirelessly or over wired connections.

In this specification, the term "software" is meant to include firmware residing in read-only memory or applications stored in magnetic storage, which can be read into memory for processing by a processor. Also, in some implementations, multiple software aspects of the subject disclosure can be implemented as sub-parts of a larger program while remaining distinct software aspects of the subject disclosure. In some implementations, multiple software aspects can also be implemented as separate programs. Finally, any combination of separate programs that together implement a software aspect described here is within the scope of the subject disclosure. In some implementations, the software programs, when installed to operate on one or more electronic systems, define one or more specific machine implementations that execute and perform the operations of the software programs.

A computer program (also known as a program, software, software application, script, or code) can be written in any form of programming language, including compiled or interpreted languages, declarative or procedural languages, and it can be deployed in any form, including as a stand alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

These functions described above can be implemented in digital electronic circuitry, in computer software, firmware or hardware. The techniques can be implemented using one or more computer program products. Programmable processors and computers can be included in or packaged as mobile devices. The processes and logic flows can be performed by one or more programmable processors and by one or more programmable logic circuitry. General and special purpose computing devices and storage devices can be interconnected through communication networks.

Some implementations include electronic components, for example, microprocessors, storage and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic or solid state hard drives, read-only and recordable Blu-Ray® discs, ultra density optical discs, any other optical or magnetic media, and floppy disks. The computer-readable media can store a computer program that is executable by at least one processing unit and includes sets of instructions for performing various operations. Examples of computer programs or computer code include machine code, for example, is produced by a compiler, and files including higher-level code that are executed by a computer, an electronic component, or a microprocessor using an interpreter.

While the above discussion primarily refers to microprocessor or multi-core processors that execute software, some implementations are performed by one or more integrated circuits, for example, application specific integrated circuits (ASICs) or field programmable gate arrays (FPGAs). In some implementations, such integrated circuits execute instructions that are stored on the circuit itself.

As used in this specification and any claims of this application, the terms "computer", "server", "processor", and "memory" all refer to electronic or other technological devices. These terms exclude people or groups of people. For the purposes of the specification, the terms display or displaying means displaying on an electronic device. As used in this specification and any claims of this application, the terms "computer readable medium" and "computer readable media" are entirely restricted to tangible, physical objects that store information in a form that is readable by a computer. These terms exclude any wireless signals, wired download signals, and any other ephemeral signals.

To provide for interaction with a user, implementations of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending webpages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

It is understood that any specific order or hierarchy of steps in the processes disclosed is an illustration of example approaches. Based upon design preferences, it is understood that the specific order or hierarchy of steps in the processes may be rearranged, or that all illustrated steps be performed. Some of the steps may be performed simultaneously. For example, in certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

A phrase such as an "aspect" does not imply that such aspect is essential to the subject technology or that such aspect applies to all configurations of the subject technology. A disclosure relating to an aspect may apply to all configurations, or one or more configurations. A phrase such as an aspect may refer to one or more aspects and vice versa. A phrase such as a "configuration" does not imply that such configuration is essential to the subject technology or that such configuration applies to all configurations of the subject technology. A disclosure relating to a configuration may apply to all configurations, or one or more configurations. A phrase such as a configuration may refer to one or more configurations and vice versa.

## Claims

1. A machine-implemented method of providing information in association with a search field, the method comprising:
receiving (604) input from a user via a search field of an application, the input including at least partial entry of a search term, wherein the search field is included in an address bar (202, 302, 402, 502) of the application, the address bar enabling the user to enter a uniform resource location;
obtaining (606) first information and second information in response to receiving the user input, wherein the first information comprises contextual data for the user comprising software version updates for out-of-date application software, and wherein the second information corresponds to one or more search term predictions for the at least partial entry of the search term; and
providing (608) for display of the first information and the second information within the application, in association with the search field.

2. The method of claim 1, wherein the search field is configured to receive user input for a web-based search, wherein the second information further corresponds to one or more uniform resource locator, URL, suggestions for the at least partial entry of the search term, and wherein providing for display of the first information and the second information comprises displaying the first information and the second information within the search field of the application.

3. The method of claim 2, wherein the first information is displayed as one or more entries within a first portion of the search field, and wherein the second information is displayed as one or more entries within a second portion of the search field.

4. The method of claim 3, wherein the one or more entries for both the first information and the second information are displayed within a drop-down list interface.

5. The method of claim 1, wherein the first information is pre-fetched and stored in local memory prior to the receiving step, and wherein obtaining the first information comprises obtaining the first information from the local memory.

6. The method of claim 1, wherein obtaining the first information comprises obtaining the first information from a web server.

7. The method of claim 1, wherein the contextual data for the user comprises news, alerts or updates associated with a geography, time, or user profile of the user.

8. The method of claim 1, wherein the first information comprises contextual data for the at least partial entry of the search term.

9. The method of claim 8, wherein the contextual data for the at least partial entry of the search term corresponds to a search result for the search term.

10. The method of claim 1, wherein providing for display of the first information and the second information comprises providing for differentiated display of the first information relative to the second information.

11. The method of claim 1, further comprising:
receiving a selection, by the user, of the displayed first information;
determining, in response to receiving the selection, a web page that is associated with the first information; and
navigating to the determined web page.

12. The method of claim 1, further comprising:
receiving a selection, by the user, of one of the one or more search term predictions corresponding to the second information; and
querying a search engine with the selected search term prediction.

13. The method of claim 1, wherein the application is a web browser.

14. A system for providing information in association with a search field, the system comprising:
one or more processors; and
a machine-readable medium comprising instructions stored therein, which when executed by the processors, cause the processors to perform the method of one of claims 1 to 13.

15. A machine-readable medium comprising instructions stored therein, which when executed by a system, cause the system to perform operations comprising:
receiving (604) input from a user via a search field of an application, the input including at least partial entry of a search term, wherein the search field is included in an address bar (202, 302, 402, 502) of the application, the address bar enabling the user to enter a uniform resource location;
obtaining (606) first information and second information in response to receiving the user input, wherein the first information comprises contextual data for the user comprising software version updates for out-of-date application software, and wherein the second information corresponds to one or more search term predictions for the at least partial entry of the search term; and
providing (608) for display of the first information and the second information within the search field of the application,
wherein the first information is displayed as one or more entries within a first portion of the search field, and wherein the second information is displayed as one or more entries within a second portion of the search field.

## Patentansprüche

1. Maschinenimplementiertes Verfahren zum Bereitstellen von Informationen in Verbindung mit einem Suchfeld, wobei das Verfahren umfasst:
Empfangen (604) eines Eingangs von einem Benutzer über ein Suchfeld einer Anwendung, wobei der Eingang zumindest eine teilweise Eingabe eines Suchbegriffs beinhaltet, wobei das Suchfeld in einer Adressleiste (202, 302, 402, 502) der Anwendung enthalten ist, wobei die Adressleiste den Benutzer befähigt, einen einheitlichen Ressourcenort einzugeben;
Erhalten (606) einer ersten Information und einer zweiten Information in Antwort auf das Empfangen des Benutzereingangs, wobei die erste Information kontextuelle Daten für den Benutzer umfasst, die Softwareversionsupdates für nicht mehr aktuelle Anwendungssoftware enthalten, und wobei die zweite Information einer oder mehreren Suchbegriffvorhersagen für die zumindest teilweise Eingabe des Suchbegriffs entspricht; und
Bereitstellen (608) der ersten Information und der zweiten Information für eine Anzeige innerhalb der Anwendung in Verbindung mit dem Suchfeld.

2. Verfahren nach Anspruch 1, wobei das Suchfeld dazu konfiguriert ist, einen Benutzereingang für eine webbasierte Suche zu empfangen, wobei die zweite Information ferner einem oder mehreren Vorschlägen von einheitlichen Ressourcenanzeigern, URL, für die zumindest teilweise Eingabe des Suchbegriffs entspricht, und wobei das Bereitstellen der ersten Information und der zweiten Information für eine Anzeige ein Anzeigen der ersten Information und der zweiten Information innerhalb des Suchfelds der Anwendung umfasst.

3. Verfahren nach Anspruch 2, wobei die erste Information angezeigt wird als eine oder mehrere Eingaben innerhalb eines ersten Bereichs des Suchfelds, und wobei die zweite Information angezeigt wird als eine oder mehrere Eingaben innerhalb eines zweiten Bereichs des Suchfelds.

4. Verfahren nach Anspruch 3, wobei die eine oder mehreren Eingaben sowohl für die erste Information als auch für die zweite Information innerhalb einer Dropdown-Listenschnittstelle angezeigt werden.

5. Verfahren nach Anspruch 1, wobei die erste Information im Voraus abgerufen und in einem lokalen Speichermedium vor dem Schritt des Empfangens gespeichert wird, und wobei das Erhalten der ersten Information ein Erhalten der ersten Information von dem lokalen Speichermedium umfasst.

6. Verfahren nach Anspruch 1, wobei das Erhalten der ersten Information ein Erhalten der ersten Information von einem Webserver umfasst.

7. Verfahren nach Anspruch 1, wobei die kontextuellen Daten für den Benutzer Nachrichten, Alarme oder Aktualisierungen im Verbindung mit einer Geografie, Zeit oder einem Benutzerprofil des Benutzers umfassen.

8. Verfahren nach Anspruch 1, wobei die erste Information kontextuelle Daten für die zumindest teilweise Eingabe des Suchbegriffs umfasst.

9. Verfahren nach Anspruch 8, wobei die kontextuellen Daten für die zumindest teilweise Eingabe des Suchbegriffs einem Suchresultat für den Suchbegriff entsprechen.

10. Verfahren nach Anspruch 1, wobei das Bereitstellen der ersten Information und der zweiten Information für eine Anzeige ein Bereitstellen der ersten Information und der zweiten Information für eine differenzierte Anzeige umfasst.

11. Verfahren nach Anspruch 1, ferner umfassend:
Empfangen einer Auswahl der angezeigten ersten Information durch den Benutzer;
Bestimmen einer Webseite, die in Verbindung mit der ersten Information steht, in Antwort auf das Empfangen der Auswahl; und
Navigieren zu der bestimmten Webseite.

12. Verfahren nach Anspruch 1, ferner umfassend:
Empfangen einer Auswahl von einem der einen oder mehreren Suchbegriffvorhersagen, die in Verbindung mit der zweiten Information stehen; und
Abfragen einer Suchmaschine mit der ausgewählten Suchbegriffvorhersage.

13. Verfahren nach Anspruch 1, wobei die Anwendungen ein Webbrowser ist.

14. System zum Bereitstellen von Informationen in Verbindung mit einem Suchfeld, umfassend:
einen oder mehrere Prozessoren; und
ein maschinenlesbares Medium, das darin gespeicherte Instruktionen umfasst, die, bei einer Ausführung durch den Prozessor, den Prozessor dazu veranlassen, das Verfahren nach einem der Ansprüche 1 bis 13 durchzuführen.

15. Maschinenlesbares Medium, das darin gespeicherte Instruktionen umfasst, die, bei einer Ausführung durch ein System, das System dazu veranlassen, Operationen durchzuführen, wobei die Operationen umfassen:
Empfangen (604) eines Eingangs von einem Benutzer über ein Suchfeld einer Anwendung, wobei der Eingang zumindest eine teilweise Eingabe eines Suchbegriffs beinhaltet, wobei das Suchfeld in einer Adressleiste (202, 302, 402, 502) der Anwendung enthalten ist, wobei die Adressleiste den Benutzer befähigt, einen einheitlichen Ressourcenort einzugeben;
Erhalten (606) einer ersten Information und einer zweiten Information in Antwort auf das Empfangen des Benutzereingangs, wobei die erste Information kontextuelle Daten für den Benutzer umfasst, die Softwareversionsupdates für nicht mehr aktuelle Anwendungssoftware enthalten, und wobei die zweite Information eine oder mehreren Suchbegriffvorhersagen für die zumindest teilweise Eingabe des Suchbegriffs entspricht; und
Bereitstellen (608) der ersten Information und der zweiten Information für eine Anzeige innerhalb des Suchfelds der Anwendung,
wobei die erste Information als eine oder mehrere Eingaben innerhalb eines ersten Bereichs des Suchfeldes angezeigt wird, und wobei die zweite Information als eine oder mehrere Eingaben innerhalb eines zweiten Bereichs des Suchfeldes angezeigt wird.

## Revendications

1. Un procédé mis en œuvre par machine pour fournir des informations en association avec un champ de recherche, le procédé comprenant :
le fait (604) de recevoir une entrée par un utilisateur via un champ de recherche d'une application, l'entrée comprenant une entrée au moins partielle d'un terme de recherche, le champ de recherche étant inclus dans une barre d'adresse (202, 302, 402, 502) de l'application, la barre d'adresse permettant à l'utilisateur de saisir un emplacement de ressource uniforme ;
le fait (606) d'obtenir des premières informations et des deuxièmes informations en réponse à la réception de l'entrée utilisateur, les premières informations comprenant des données contextuelles pour l'utilisateur comprenant des mises à jour de version de logiciel pour un logiciel d'application obsolète, et les deuxièmes informations correspondant à une ou plusieurs prédictions de termes de recherche pour ladite entrée au moins partielle du terme de recherche ; et
le fait (608) de prévoir l'affichage des premières informations et des deuxièmes informations dans l'application, en association avec le champ de recherche.

2. Le procédé selon la revendication 1, dans lequel le champ de recherche est configuré pour recevoir une entrée utilisateur pour une recherche sur le Web, les deuxièmes informations correspondant en outre à une ou plusieurs suggestions de localisateurs de ressources uniformes, en abrégé URL, pour ladite entrée au moins partielle du terme de recherche, et le fait de fournir l'affichage des premières informations et des deuxièmes informations comprenant le fait d'afficher les premières informations et les deuxièmes informations dans le champ de recherche de l'application.

3. Le procédé selon la revendication 2, dans lequel les premières informations sont affichées sous la forme d'une ou plusieurs entrées dans une première partie du champ de recherche, et dans lequel les deuxièmes informations sont affichées sous la forme d'une ou plusieurs entrées dans une deuxième partie du champ de recherche.

4. Le procédé selon la revendication 3, dans lequel lesdites une ou plusieurs entrées pour à la fois les premières informations et les deuxièmes informations sont affichées dans une interface de liste déroulante.

5. Le procédé selon la revendication 1, dans lequel les premières informations sont pré-extraites et stockées dans une mémoire locale avant l'étape de réception, et dans lequel l'obtention des premières informations comprend le fait d'obtenir les premières informations à partir de la mémoire locale.

6. Le procédé selon la revendication 1, dans lequel l'obtention des premières informations comprend le fait d'obtenir les premières informations à partir d'un serveur Web.

7. Le procédé selon la revendication 1, dans lequel les données contextuelles pour l'utilisateur comprennent des nouvelles, des alertes ou des mises à jour associées à une géographie, une heure ou un profil d'utilisateur de l'utilisateur.

8. Le procédé selon la revendication 1, dans lequel les premières informations comprennent des données contextuelles pour ladite entrée au moins partielle du terme de recherche.

9. Le procédé selon la revendication 8, dans lequel les données contextuelles pour ladite entrée au moins partielle du terme de recherche correspondent à un résultat de recherche pour le terme de recherche.

10. Le procédé selon la revendication 1, dans lequel le fait de prévoir l'affichage des premières informations et des deuxièmes informations comprend le fait de prévoir un affichage différencié des premières informations par rapport aux deuxièmes informations.

11. Le procédé selon la revendication 1, comprenant en outre :
le fait de recevoir une sélection, par l'utilisateur, des premières informations affichées ;
le fait de déterminer, en réponse à la réception de la sélection, une page Web qui est associée aux premières informations ; et
le fait de naviguer vers la page Web déterminée.

12. Le procédé selon la revendication 1, comprenant en outre :
le fait de recevoir une sélection, par l'utilisateur, une desdites une ou plusieurs prédictions de termes de recherche correspondant aux deuxièmes informations ; et
le fait d'interroger un moteur de recherche avec la prédiction de terme de recherche sélectionnée.

13. Le procédé selon la revendication 1, dans lequel l'application est un navigateur Web.

14. Un système pour fournir des informations en association avec un champ de recherche, le système comprenant :
un ou plusieurs processeurs ; et
un support lisible par machine comprenant des instructions stockées en lui, qui, lorsqu'elles sont exécutées par les processeurs, amènent les processeurs à mettre en œuvre le procédé selon l'une des revendications 1 à 13.

15. Un support lisible par machine comprenant des instructions stockées en lui, qui, lorsqu'elles sont exécutées par un système, amènent le système à mettre en œuvre des opérations comprenant :
le fait (604) de recevoir une entrée par un utilisateur via un champ de recherche d'une application, l'entrée comprenant une entrée au moins partielle d'un terme de recherche, le champ de recherche étant inclus dans une barre d'adresse (202, 302, 402, 502) de l'application, la barre d'adresse permettant à l'utilisateur de saisir un emplacement de ressource uniforme ;
le fait (606) d'obtenir des premières informations et des deuxièmes informations en réponse à la réception de l'entrée utilisateur, les premières informations comprenant des données contextuelles pour l'utilisateur comprenant des mises à jour de version de logiciel pour un logiciel d'application obsolète, et les deuxièmes informations correspondant à une ou plusieurs prédictions de termes de recherche pour ladite entrée au moins partielle du terme de recherche ; et
le fait (608) de prévoir l'affichage des premières informations et des deuxièmes informations dans le champ de recherche de l'application,
les premières informations étant affichées sous la forme d'une ou plusieurs entrées dans une première partie du champ de recherche, et les deuxièmes informations étant affichées en tant qu'une ou plusieurs entrées dans une deuxième partie du champ de recherche.
